# FASCICULE DE BREVET EUROPEEN

(11) **EP 2 145 036 B1**
(45) Date de publication et mention de la délivrance du brevet: **09.03.2011**
(21) Numéro de dépôt: 08751200.0
(22) Date de dépôt: 14.05.2008
(51) Int. Cl.: D04H 13/00, B29C 70/08, B32B 5/26

(54) **ARMATURE TEXTILE DE RENFORCEMENT ET SON PROCEDE DE REALISATION**
TEXTILE VERSTÄRKUNGSBEWEHRUNG UND HERSTELLUNGSVERFAHREN DAFÜR
REINFORCEMENT TEXTILE ARMATURE AND METHOD FOR MAKING SAME

(30) Priorité: 15.05.2007 FR 0755073; 03.09.2007 FR 0757334
(43) Date de publication de la demande: 20.01.2010
(73) Titulaire: Chomarat, Gilbert, 1223 Cologny (CH)
(72) Inventeur: Chomarat, Gilbert, 1223 Cologny (CH)
(74) Mandataire: Poncet, Jean-François
(86) Numéro de dépôt international: PCT/IB2008/051905
(87) Numéro de publication internationale: WO 2008/139423

(56) Documents cités:
- EP-A- 0 395 548
- EP-A- 0 659 922
- EP-A- 1 126 067
- EP-A- 1 772 258
- WO-A-98/35086
- WO-A-03/038175
- WO-A-2006/053978

## Description

### DOMAINE TECHNIQUE DE L'INVENTION

La présente invention concerne les armatures textiles utilisées comme produits de renforcement d'articles composites, c'est-à-dire d'articles à base de résine (polyester ou autre) armée d'une armature textile de renforcement.

Des armatures textiles de renforcement sont connues du document EP 0 395 548 qui décrit l'utilisation de deux couches de renfort textiles disposées de part et d'autre d'une couche centrale constituée par une nappe à base de fibres à ondulations permanentes. Les couches de renfort textiles et la couche centrale sont liées par couture/tricotage.

Le document EP 0 694 643 décrit quant à lui une armature textile utilisée pour la réalisation d'articles composites, constituée par au moins deux couches de renfort textiles proprement dites, disposées de part et d'autre d'une couche centrale donnant l'épaisseur dudit matériau, lesdites couches étant liées entre elles par couture/tricotage, dans laquelle on prévoit au moins contre l'une de ses faces externes, un voile de fibres synthétiques, la liaison dudit voile étant réalisée soit par collage à l'extérieur du complexe, soit par l'intermédiaire des coutures liant les différentes couches entre elles.

Les techniques de couture/tricotage sont relativement lentes et conduisent à des cadences de fabrication lentes, de l'ordre de 3 à 5 mètres par minute, et qu'il n'est pas possible d'accélérer.

Les armatures textiles de ces documents présentent en outre des capacités de déformation non uniformes selon leur surface, en raison de l'utilisation de moyens de solidarisation des différentes couches textiles entre elles par couture/tricotage.

Et la présence de lignes de couture/tricotage induit des défauts d'aspect en surface de la pièce finie obtenue après imprégnation de l'armature textile par de la résine.

Du document EP 0 659 922, on connaît l'utilisation de deux couches de renfort textiles disposées respectivement de part et d'autre d'une couche centrale constituée par une nappe à base de fibres à ondulations permanentes, avec, sur au moins une des couches de renfort textiles, un voile fibreux à base de fibres chimiques à frisure permanente et de titre inférieur à celui des fibres de la couche centrale. Le ou les voiles fibreux, les couches de renfort textiles et la couche centrale sont liés entre eux par aiguilletage.

La technique d'aiguilletage reste lente, conduisant à des cadences de fabrication du même ordre que la technique de couture/tricotage. Et la liaison entre les couches de l'armature est souvent insuffisante.

En outre, pour assurer une cohésion suffisante rendant le produit manipulable, on doit utiliser un aiguilletage fort, ce qui casse des fibres de verre.

### EXPOSE DE L'INVENTION

Un premier problème proposé par l'invention est de fournir une armature textile peu onéreuse car rapide à fabriquer, qui présente de bonnes capacités de déformation multidirectionnelle lors de son utilisation pour la réalisation de matériaux ou pièces composites.

Simultanément, la présente invention cherche à fournir une armature textile qui puisse être imprégnée par de la résine de façon aisée et homogène lors de l'utilisation de techniques de moulage à la presse, de moulage par injection ou de moulage sous vide.

Selon un autre aspect, l'invention cherche à fournir une telle armature textile qui puisse être facilement découpée sans effilochage.

Pour atteindre ces buts, ainsi que d'autres, l'invention propose une armature textile utilisable pour la réalisation de matériaux ou pièces composites, comprenant :
- une couche centrale à base de tronçons de fibres en un premier type de matériau synthétique, ayant reçu préalablement à leur mise sous forme de couche un traitement leur communiquant une frisure permanente,
- des couches externes disposées de part et d'autre de la couche centrale,
dans laquelle :
- les couches externes comportent des tronçons de fibres chimiques ayant reçu préalablement un traitement leur communiquant une frisure permanente, et des tronçons de fibres de renfort,
- certains au moins des tronçons de fibres chimiques pénètrent selon une partie de leur longueur dans la couche centrale,
- les tronçons de fibres chimiques comportent au moins des premiers tronçons de fibres chimiques comportant au moins une couche superficielle en un matériau thermofusible ayant une température de fusion inférieure ou égale à celle des tronçons de fibres de la couche centrale,
- les premiers tronçons de fibres chimiques des couches externes adhèrent au moins partiellement entre eux et aux autres tronçons de fibres de l'armature textile.

Une telle armature textile présente de bonnes capacités de déformation selon plusieurs directions. Plus particulièrement, une telle armature ne comporte aucune direction de déformation privilégiée, ni aucune direction selon laquelle une déformation est empêchée. L'armature textile selon l'invention comporte une cohérence homogène selon toutes les directions entre ses différentes couches textiles.

Du fait de l'adhérence des fibres chimiques avec les fibres de la couche centrale d'armature textile qu'elles pénètrent, il est possible d'assurer une liaison efficace des couches d'armature entre elles au moyen d'un nombre relativement réduit de telles fibres chimiques pénétrant la couche centrale. La pénétration d'un nombre relativement réduit de fibres chimiques peut alors être réalisée par une technique de pré-aiguilletage ou d'aiguilletage léger, consistant en un aiguilletage moins dense. Le pré-aiguilletage est beaucoup plus rapide qu'un tricotage/couture, et il évite de rompre les fibres de renfort, surtout lorsque celles-ci sont en verre.

La frisure permanente des tronçons de fibres de la couche centrale permet une déformation aisée de l'armature textile pour son utilisation dans des techniques de moulage. En outre, la frisure permanente des tronçons de fibres de la couche centrale permet de préserver des espaces libres entre les tronçons de fibres, conférant ainsi à l'armature un caractère aéré, ce qui favorise le fluage de la résine lors de l'utilisation de techniques de moulage à la presse, de moulage par injection ou de moulage sous vide.

L'adhésion des tronçons de fibres chimiques des couches externes entre eux permet de limiter efficacement le risque d'effilochage de l'armature textile lors de son découpage. On évite notamment l'effilochage des tronçons de fibres de verre qui arment l'armature textile.

Les fibres chimiques ont une frisure permanente qui permet par exemple de réaliser des couches externes homogènes à partir d'un mélange homogène de tronçons de fibres de renfort et de tronçons de fibres chimiques. La frisure des fibres chimiques permet en effet d'éviter une "décantation" du mélange de fibres du fait de leurs densités relatives ou sections différentes. Selon un premier mode de réalisation, on peut ainsi obtenir un mélange homogène conduisant à l'obtention de couches externes homogènes : dans les couches externes, les fibres chimiques et les fibres de renfort sont alors mélangées de façon généralement homogène.

Les fibres de renfort peuvent être des fibres de verre ou des fibres végétales (chantre sisal, lin).

De préférence, les tronçons de fibres de la couche centrale peuvent être en polypropylène, en polyester ou en polyamide. Ces fibres sont en effet très répandues dans l'industrie textile, de coût peu élevé, facilement filables et aisées à mettre en forme pour la réalisation de tronçons de fibres à frisure permanente élastique.

Pour une plus grande régularité de la couche centrale, on peut prévoir que les tronçons de fibres de la couche centrale présentent au moins deux titres unitaires différents.

Avantageusement, les tronçons de fibres chimiques présents dans les couches externes ont une section transversale de diamètre inférieur à celui des tronçons de fibres de renfort. Cette différence de diamètres permet de favoriser l'entraînement et la pénétration de certains au moins des tronçons des fibres chimiques des couches externes selon une partie au moins de leur longueur dans la couche centrale par un procédé de pré-aiguilletage. Lors du pré-aiguilletage, les aiguilles choisies pour entraîner les tronçons de fibres chimiques ont une faible section transversale, de sorte qu'elles n'entraînent pas ou peu les tronçons de fibres de renfort. On évite ainsi de briser les fragiles tronçons de fibres de renfort qui arment l'armature textile, surtout dans le cas de fibres de renfort en verre.

Avantageusement, les premiers tronçons de fibres chimiques des couches externes peuvent être en une matière thermofusible à température de fusion inférieure à celle des tronçons de fibres de la couche centrale.

Selon un mode de réalisation avantageux de l'invention, les premiers tronçons de fibres chimiques des couches externes peuvent être en polyéthylène.

Le polyéthylène est une matière très répandue dans l'industrie textile, peu onéreuse et à basse température de fusion. Il permet un liage thermique à moindre coût énergétique.

Selon un autre mode de réalisation avantageux de l'invention, on peut prévoir que :
- les premiers tronçons de fibres chimiques des couches externes sont des tronçons de fibres bi-composant, ayant une âme centrale en un premier composant et une gaine externe en un second composant,
- la température de fusion du premier composant de l'âme centrale est supérieure à celle de second composant de la gaine.

L'utilisation de telles fibres bi-composant permet la réalisation d'un liage thermique sans risquer une dégradation notoire ou accidentelle des couches externes pour leur liaison à la couche centrale : seule la gaine externe des fibres bi-composant sera amenée à se ramollir et à participer au liage thermique, leur âme restant inaltérée et conservant ses propriétés mécaniques.

Dans certains cas, notamment dans le cas de fibres de renfort en verre, il peut être relativement difficile d'assurer une homogénéité satisfaisante du mélange des fibres de renfort et des fibres chimiques dans les couches externes. Dans ce cas, on peut avantageusement réaliser les couches externes sous forme stratifiée, comprenant une strate externe essentiellement en tronçons de fibres chimiques, une strate interne essentiellement en tronçons de fibres chimiques, et une strate intermédiaire essentiellement en fibres de renfort. La liaison entre les strates est assurée par le pré-aiguilletage suivi du ramollissement superficiel des premiers tronçons de fibres chimiques, certaines fibres chimiques de la strate externe traversant les strates intermédiaire et interne de la couche externe pour pénétrer dans la couche centrale de l'armature textile.

Un autre avantage de ce mode de réalisation est que la surface extérieure de l'armature textile est constituée essentiellement de fibres chimiques. Ces fibres chimiques adhèrent les unes aux autres par leur couche superficielle en matière thermofusible, et s'opposent ainsi à l'effilochage ou à la détérioration des fibres de renfort lors des manipulations ultérieures de l'armature textile non encore noyée dans de la résine.

On notera la possibilité de supprimer la strate interne en fibres chimiques.

Selon une première variante des deux modes de réalisation, les tronçons de fibres chimiques des couches externes peuvent ne comporter que des premiers tronçons de fibres chimiques.

En alternative, selon une seconde variante des deux modes de réalisation, les tronçons de fibres chimiques des couches externes peuvent comporter un mélange de premiers tronçons de fibres chimiques et de seconds tronçons de fibres chimiques. Les seconds tronçons de fibres chimiques sont en une matière à température de fusion supérieure à la température de fusion de la matière thermofusible des premiers tronçons de fibres chimiques, et de prix très inférieur au prix des fibres chimiques dans lesquelles sont fabriqués les premiers tronçons de fibres chimiques. Par exemple, les seconds tronçons de fibres chimiques sont en polyamide ou polyester.

Selon un autre aspect, l'invention propose un procédé de fabrication d'une armature textile utilisable pour la réalisation de matériaux ou pièces composites, comportant les étapes successives suivantes :
a) prévoir une couche centrale à base de tronçons de fibres en un premier type de matériau synthétique, ayant reçu préalablement à leur mise sous forme de couche un traitement leur communiquant une frisure permanente,
b) disposer, de part et d'autre de la couche centrale, une couche externe comportant des tronçons de fibres de renfort et des tronçons de fibres chimiques à frisure permanente comportant au moins des premiers tronçons de fibres chimiques ayant au moins une couche superficielle en un second type de matériau synthétique thermofusible à température de fusion inférieure ou égale à celle du premier type de matériau synthétique,
c) effectuer un pré-aiguilletage pour faire pénétrer, selon une partie de leur longueur, des tronçons de fibres chimiques dans la couche centrale,
d) chauffer l'armature textile pour ramollir au moins superficiellement et rendre adhérents les tronçons de fibres chimiques.

Un tel procédé de fabrication est facile à réaliser avec des moyens techniques (machines, outillage,) connus et très répandus dans l'industrie textile. Le procédé est ainsi peu onéreux. L'utilisation d'un liage thermique permet également une cadence de production plus élevée que celle lors de l'utilisation d'un liage par couture/tricotage ou par aiguilletage.

De préférence, au cours de l'étape d), le chauffage peut être réalisé par circulation d'air chaud à travers l'armature textile. Un tel mode de chauffage permet un liage thermique des fibres entre elles jusqu'au coeur de l'armature textile, et évite un échauffement intensif des faces inférieure et supérieure de l'armature textile sur lesquelles sont disposées les couches externes comportant des tronçons de fibres chimiques. On évite ainsi la fusion excessive des tronçons de fibres chimiques des couches externes et la formation d'une couche continue de matière thermofusible après refroidissement, couche continue qui nuirait à une bonne imprégnation de l'armature textile par la résine lors de son utilisation dans des techniques de moulage à la presse, de moulage par injection ou de moulage sous vide.

En alternative, au cours de l'étape d), le chauffage peut être réalisé par rayonnement infrarouge de longueur d'onde appropriée pour le ramollissement des premiers tronçons de fibres chimiques, ou par rayonnement haute fréquence de type micro-ondes.

### DESCRIPTION SOMMAIRE DES DESSINS

D'autres objet, caractéristiques et avantages de la présente invention ressortiront de la description suivante de modes de réalisation particuliers, faite en relation avec les figures jointes, parmi lesquelles :
- la figure 1 est une vue schématique en coupe longitudinale d'une armature textile selon un premier mode de réalisation de l'invention, au cours de sa fabrication ;
- la figure 2 est une vue schématique en coupe longitudinale de l'armature textile de la figure 1 lors d'une opération de pré-aiguilletage ;
- la figure 3 est une vue schématique en coupe longitudinale de l'armature textile de la figure 2 lors d'une opération de chauffage ;
- la figure 4 illustre, en perspective, un tronçon de fibres chimiques selon une structure bi-composant ; et
- la figure 5 est une vue schématique en coupe longitudinale d'une armature textile selon un second mode de réalisation de l'invention.

### DESCRIPTION DES MODES DE REALISATION PREFERES

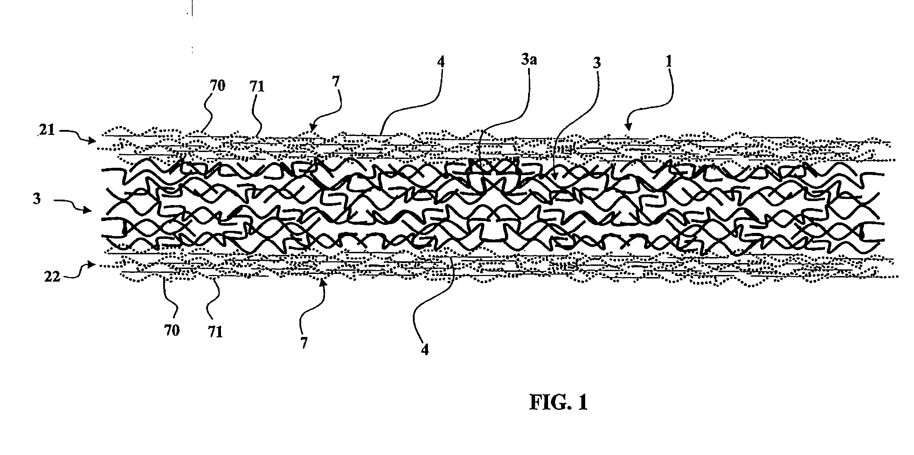

Dans un premier mode de réalisation illustré sur la figure 1, une armature textile 1 selon l'invention comporte trois couches textiles 21, 3 et 22 successives. La couche centrale 3 est à base de tronçons de fibres 3a en un premier type de matériau synthétique. Les tronçons de fibres 3a ont reçu préalablement à leur mise sous forme de couche un traitement leur communiquant une frisure permanente.

Pour garantir une meilleure durabilité du caractère élastique des tronçons de fibres 3a frisés, ceux-ci peuvent avantageusement être fabriqués à partir de fibres monobrins.

Les tronçons de fibres 3a peuvent présenter le même titre unitaire. On peut néanmoins prévoir que les tronçons de fibres 3a présentent au moins deux titres unitaires différents pour une plus grande régularité de la couche centrale 3. La couche centrale 3 peut ainsi comporter des tronçons de fibres 3a de 110 dTex et des tronçons de fibres 3a de 70 dTex par exemple.

De part et d'autre de la couche centrale 3 sont disposées des couches textiles externes 21 et 22. Les couches textiles externes 21 et 22 sont, dans ce mode de réalisation, des couches à base d'un mélange de tronçons de fibres de renfort 4 et de tronçons de fibres chimiques 7.

Les tronçons de fibres chimiques 7 ont reçu préalablement un traitement leur communiquant une frisure permanente.

Les couches textiles externes 21 et 22 sont obtenues à partir d'un mélange homogène de tronçons de fibres chimiques 7 et de tronçons de fibres de renfort 4 telles que des fibres de verre ou des fibres végétales. Un tel mélange homogène peut être obtenu au moyen d'un coupeur approprié, et sera ensuite déposé par gravité sur les deux faces de la couche centrale 3.

L'homogénéité du mélange est également obtenue grâce à la frisure permanente des tronçons de fibres chimiques 7 qui donne une "accroche" au mélange et évite un phénomène de "décantation" dû aux densités relatives ou sections différentes des tronçons de fibres de renfort 4 et des tronçons de fibres chimiques 7.

De bons résultats ont été obtenus avec des couches externes 21, 22 réalisées à partir d'un mélange homogène avec une teneur de 90 % en poids de tronçons de fibres de verre 4 et de 10 % en poids de tronçons de fibres chimiques 7.

Les tronçons de fibres chimiques 7 des couches textiles externes 21 et 22 comportent au moins des premiers tronçons de fibres chimiques 70 en un matériau thermofusible ayant une température de fusion inférieure ou égale à celle des tronçons de fibres 3a de la couche centrale 3. Dans l'état représenté sur la figure 1, l'armature textile 1 ne présente aucune cohésion ni liaison sûre qui autorise son transport.

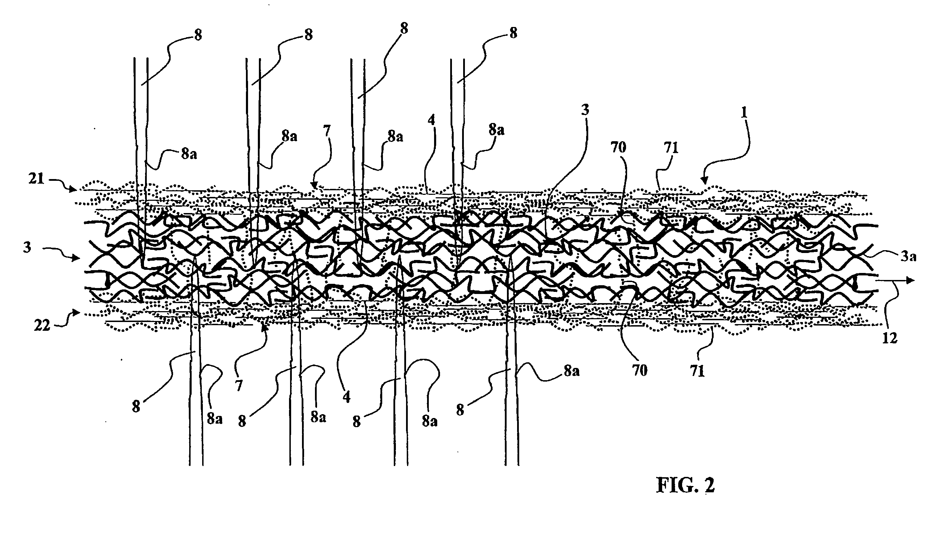

Une fois munie de ses trois couches textiles 21, 3 et 22, l'armature textile 1 subit un traitement de pré-aiguilletage illustré sur la figure 2. Au cours de cette opération de pré-aiguilletage, des aiguilles 8 font pénétrer certains au moins des tronçons de fibres chimiques 7 (dont des premiers tronçons de fibres chimiques 70) de chaque couche textile externe 21 et 22 selon une partie de leur longueur dans la couche centrale 3. Le sens de déplacement de l'armature textile 1 est indiqué par la flèche 12, et le sens de déplacement des aiguilles est perpendiculaire à cette direction 12 et à la surface de l'armature textile 1.

Les aiguilles 8 utilisées ont des barbes 8a de dimensions adaptées pour entraîner préférentiellement les tronçons de fibres chimiques 7, et notamment les premiers tronçons de fibres chimiques 70, en évitant d'entraîner les tronçons de fibres de renfort 4 des couches textiles externes 21 et 22. En pratique, les tronçons de fibres chimiques 7, notamment les premiers tronçons de fibres chimiques 70, ont un diamètre plus faible que les tronçons de fibres de renfort 4. On utilise par exemple des tronçons de fibres chimiques 7 d'environ 2 à 6 deniers environ et des tronçons de fibres de renfort 4 d'environ 40 Tex minimum.

Il est entendu que les épaisseurs et dimensions des traits représentant les tronçons de fibres 3a, 4, 7 et 70 sur les figures 1 à 3 ne sont pas représentatives des épaisseurs et dimensions réelles des tronçons de fibres 3a, 4, 7 et 70. Les épaisseurs et dimensions utilisées sur les figures 1 à 3 n'ont pour but que de faciliter la compréhension du lecteur pour la distinction des différentes fibres 3a, 4, 7 et 70 et couches textiles 21, 3 et 22.

Le pré-aiguilletage se distingue d'un aiguilletage en ce qu'il comporte une vitesse de passage de l'armature textile 1 entre les aiguilles 8 plus rapide et une plus faible densité d'aiguilles 8. A titre indicatif, un aiguilletage classique permet un débit de fabrication d'au plus environ 4 mètres par minute, tandis qu'un pré-aiguilletage permet un débit compris entre environ 8 mètres par minute et environ 20 mètres par minute. Toujours à titre illustratif et indicatif, une machine d'aiguilletage comporte de façon classique une densité des aiguilles au mètre courant comprise entre environ 1 600 et 32 000, tandis qu'une machine de pré-aiguilletage présente une densité des aiguilles au mètre courant comprise entre environ 900 et 1 400.

La faible densité d'aiguilles au mètre courant permet de limiter le risque de casse des tronçons de fibres de renfort 4 des couches textiles 21 et 22, surtout dans le cas de fibres de renfort 4 en verre, lorsque les aiguilles 8 font pénétrer certains des tronçons des fibres chimiques 7 des couches externes 21 et 22 dans la couche centrale 3.

Le pré-aiguilletage effectué est suffisant pour assurer la cohésion pendant le transfert de l'ébauche d'armature textile jusqu'à un poste de travail suivant, mais est insuffisant pour assurer la cohésion définitive de l'armature textile 1, et celle-ci n'est toujours pas transportable en sortie de la pré-aiguilleteuse pour un usage comme produit de renfort.

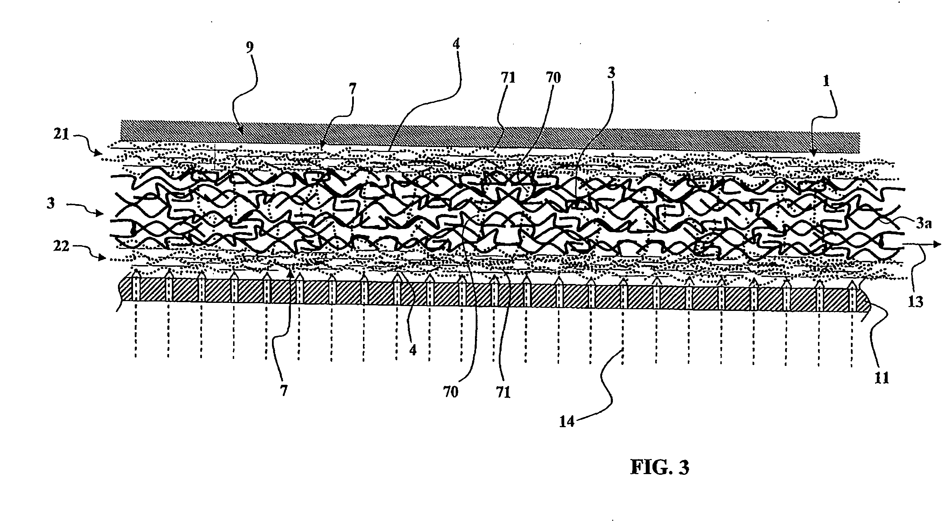

Après l'opération de pré-aiguilletage illustrée sur la figure 2, l'armature textile 1 est soumise à un échauffement (figure 3). Lors de cette étape de chauffage, la couche superficielle thermofusible des premiers tronçons des fibres chimiques 70 des couches textiles externes 21 et 22 est amollie et rend les premiers tronçons chimiques 70 adhérents. Les premiers tronçons de fibres chimiques 70 qui ont été entraînés par les aiguilles 8 de pré-aiguilletage adhèrent aux tronçons de fibres de renfort 4 adjacents des couches textiles externes 21 et 22, et adhèrent aux tronçons de fibres 3a adjacents de la couche centrale 3. Après refroidissement, les différentes couches textiles 21, 3 et 22 de l'armature textile 1 sont ainsi liées entre elles par les fibres aiguilletées et collées des premiers tronçons de fibres chimiques 70 au moins en partie thermofusibles. L'armature textile 1 est alors transportable. L'adhésion des premiers tronçons de fibres chimiques 70 au moins en partie thermofusibles aux tronçons de fibres de renfort 4 des couches textiles externes 21 et 22 et aux tronçons de fibres 3a de la couche centrale 3 permet de compenser l'insuffisance du pré-aiguilletage pour assurer la cohésion de l'armature textile 1 afin de la rendre transportable.

Selon un mode de réalisation avantageux de l'invention, les tronçons de fibres 3a de la couche centrale 3 peuvent être en polypropylène. Le polypropylène est en effet facilement filable et aisé à mettre en forme pour la réalisation de tronçons de fibres à frisure permanente élastique. On peut également utiliser des tronçons de fibres 3a en polyester ou en polyamide.

Dans un mode de réalisation de l'invention, les tronçons de fibres chimiques 7 comportent des premiers tronçons de fibres 70 thermofusibles qui sont en polyéthylène. On peut également utiliser des premiers tronçons de fibres chimiques 70 thermofusibles en toute autre matière ayant une température de fusion inférieure à celle des tronçons de fibres 3a de la couche centrale 3.

L'utilisation du polyéthylène est avantageuse du fait de sa basse température de fusion. Les tronçons de fibres en polypropylène, polyester ou polyamide 3a de la couche centrale 3 sont peu, voire aucunement détériorés par l'opération de chauffage et conservent alors toutes leurs caractéristiques physiques et techniques. En revanche, les premiers tronçons des fibres chimiques 70 en polyéthylène entraînés par le pré-aiguilletage dans les couches textiles externes 21 et 22 sont ramollis par l'échauffement, et vont adhérer aux fibres adjacentes des couches textiles 21 et 22, ainsi qu'entre eux.

Le chauffage est réglé pour ramollir et rendre adhésifs les premiers tronçons de fibres chimiques 70 thermofusibles, mais sans les fondre. On évite ainsi la formation de couches extérieures uniformes et imperméables à la résine sur les faces inférieure et supérieure de l'armature textile 1. De telles couches uniformes et imperméables nuiraient en effet à une bonne imprégnation de l'armature textile 1 par la résine lors d'une étape, ultérieure de mise en forme par moulage à la presse, moulage par injection ou moulage sous vide.

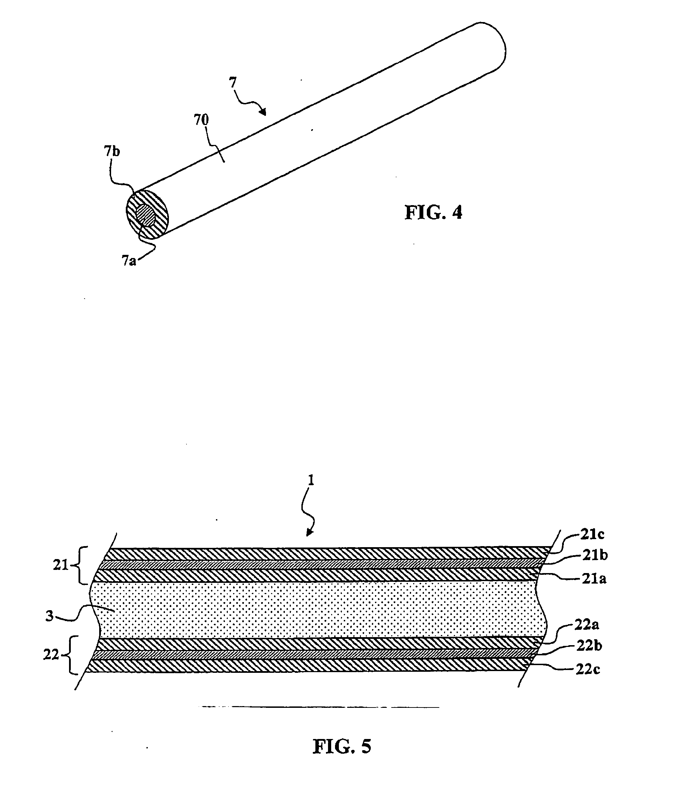

Selon un autre mode de réalisation avantageux de l'invention, pour éviter tout risque de formation de couches extérieures peu perméables à la résine, on peut utiliser comme premiers tronçons de fibres chimiques 70 des fibres thermofusibles bi-composant telles qu'illustrées sur la figure 4, ayant une âme centrale 7a et une gaine externe 7b, la température de fusion de l'âme centrale 7a étant supérieure à celle de la gaine externe 7b.

Les premiers tronçons de fibres chimiques 70 bi-composant peuvent comporter une âme centrale 7a en polyamide ou polyester ou polypropylène, et une gaine externe 7b en copolyester, en polyéthylène, ou en toute autre matière ayant une température de fusion inférieure à celle des tronçons de fibres 3a de la couche centrale 3. En particulier de bons résultats ont été obtenus en utilisant une âme centrale en polyester et une gaine externe en copolyester, ou une âme centrale en polypropylène et une gaine externe en polyéthylène. D'autres couples de matières peuvent être utilisés sous forme de fibres bi-composant coaxiales : le polypropylène et le copolypropylène ; le polypropylène et l'acétate d'éthylevinyle.

Par le fait que l'âme centrale 7a a une température de fusion plus élevée que la gaine externe 7b, on évite un risque accidentel de fusion complète des premiers tronçons de fibres chimiques 70 thermofusibles des couches textiles externes 21 et 22 lors de la fabrication de l'armature textile 1.

On limite aussi efficacement le risque, lors de l'étape d'échauffement, que les premiers tronçons de fibres chimiques 70 thermofusibles soient, par un échauffement trop élevé ou mal contrôlé, complètement fondus, formant des couches uniformes et imperméables à la résine par étalement de leur matière constitutive sur les faces supérieure et inférieure de l'armature textile 1. L'âme des fibres bi-composant n'est pas (ou très peu) altérée : les couches textiles externes 21 et 22 ne sont ainsi pas dégradées.

En outre, l'utilisation de premiers tronçons de fibres chimiques 70 thermofusibles bi-composant à gaine externe 7b et âme centrale 7a permet de réduire la teneur en polyoléfine de l'armature textile 1. Ceci s'avère avantageux, la résine étant peu compatible avec les polyoléfines. En effet, la résine accroche mal sur des fibres en polyoléfine.

Dans le cas de l'utilisation de premiers tronçons de fibres chimiques 70 thermofusibles bi-composant, on peut choisir avantageusement des premiers tronçons de fibres chimiques 70 thermofusibles bi-composant à gaine externe 7b en copolyester ou polyéthylène. Les tronçons de fibre en polypropylène ou polyester ou polyamide 3a de la couche centrale 3 ne sont ainsi pas affectés par le chauffage. En effet, le copolyester et le polyéthylène ont des températures de fusion inférieures à celles du polypropylène, du polyester ou du polyamide. Il est alors possible de chauffer l'armature textile 1 à une température juste suffisante pour parvenir à un ramollissement du copolyester ou polyéthylène des premiers tronçons de fibres chimiques 70 thermofusibles bi-composant sans ramollir ni affecter les tronçons de fibres en polypropylène, polyester ou polyamide 3a de la couche centrale 3.

Dans un second mode de réalisation, illustré sur la figure 5, une armature textile 1 selon l'invention comporte à nouveau trois couches textiles 21, 3 et 22 successives. La couche centrale 3 a la même structure que la couche centrale 3 du mode de réalisation-de la figure 1 précédemment décrit.

Dans ce second mode de réalisation de la figure 5, la différence réside dans la structure des couches externes 21 et 22. Dans ce cas, les couches externes 21 et 22 sont des couches stratifiées, comprenant chacune une strate externe, respectivement 21 c ou 22c, une strate interne, respectivement 21 a ou 22a, et une strate intermédiaire respectivement 21 b ou 22b.

Les strates externes 21 c et 22c ainsi que les strates internes 21 a et 22a sont essentiellement constituées de tronçons de fibres chimiques telles que les fibres chimiques 7 du mode de réalisation de la figure 1 (qui comportent au moins des premiers tronçons de fibres chimiques 70 comportant au moins une couche superficielle en un matériau thermofusible).

Les strates intermédiaires 21 b et 22b sont essentiellement constituées de fibres de renfort telles que les fibres de renfort 4 du mode de réalisation de la figure 1.

Lors du pré-aiguilletage, des tronçons de fibres chimiques 7, dont des premiers tronçons de fibres chimiques 70, sont entraînés par les aiguilles et traversent les strates jusqu'à pénétrer dans la couche centrale 3. L'échauffement ultérieur colle les premiers tronçons de fibres chimiques 70 aux autres fibres, et assure la liaison des couches et strates.

Selon une variante de ce second mode de réalisation, on peut omettre la présence d'une strate interne 21 a, 22a.

L'armature textile 1 selon l'invention peut aisément être fabriquée à faible coût par un procédé comportant les étapes successives suivantes :
a) prévoir une couche centrale 3 à base de tronçons de fibres 3a en un premier type de matériau synthétique, ayant reçu préalablement à leur mise sous forme de couche un traitement leur communiquant une frisure permanente,
b) disposer, de part et d'autre de la couche centrale 3, une couche externe respectivement 21 et 22 comportant des tronçons de fibres de renfort 4 et des tronçons de fibres chimiques 7 à frisure permanente comportant au moins des premiers tronçons de fibres chimiques 70 ayant au moins une couche superficielle 7b en un second type de matériau synthétique thermofusible à température de fusion inférieure ou égale à celle du premier type de matériau synthétique,
c) effectuer un pré-aiguilletage (figure 2) pour faire pénétrer, selon une partie de leur longueur, des tronçons de fibres chimiques 7, et notamment des premiers tronçons de fibres chimiques 70, de chaque couche externe 21 et 22 dans la couche centrale 3,
d) chauffer l'armature textile 1 (figure 3) pour ramollir au moins superficiellement et rendre adhérents lesdits au moins premiers tronçons de fibres chimiques 70.

Après l'étape d) de chauffage de l'armature textile 1, on peut avantageusement effectuer une étape e) de calandrage à froid de l'armature textile 1 pour lui donner une épaisseur constante et homogène. Le calandrage favorise aussi le rapprochement et le collage des fibres entre elles.

Les tronçons de fibres chimiques 7 des couches externes 21 et 22, et notamment des premiers tronçons de fibres chimiques 70, peuvent avantageusement avoir un diamètre inférieur à celui des tronçons de fibres de renfort 4. Le pré-aiguilletage de l'étape c) est alors effectué à l'aide des aiguilles 8 (figure 2) qui comportent des barbes 8a aptes à entraîner préférentiellement les tronçons de fibres chimiques 7, dont les premiers tronçons de fibres chimiques 70, mais inaptes à entraîner de façon sensible les tronçons de fibres de renfort 4 à diamètre plus gros.

Au cours de l'étape d) de chauffage, on fait passer l'armature textile 1 dans un four à air traversant 9. Le four à air traversant 9 comporte un tapis transporteur 11 qui déplace l'armature textile 1 à travers le four 9 dans le sens défini par la flèche 13. Le tapis transporteur 11 est ajouré. Des jets d'air chaud 14 sont ainsi envoyés à travers l'armature textile 1 pour l'échauffer selon toute son épaisseur afin de faire adhérer les premiers tronçons de fibres chimiques 70 au moins en partie thermofusibles aux tronçons de fibres 3a de la couche centrale 3 et aux tronçons de fibres de renfort 4 des couches externes 21 et 22.

Pour réaliser une armature textile 1 selon le mode de réalisation des figures 1 à 3, au cours de l'étape b), un mélange homogène de tronçons de fibres chimiques 7 et de tronçons de fibres de renfort 4 est obtenu au moyen d'un coupeur et déposé par gravité sur les deux faces de la couche centrale 3.

Pour réaliser une armature textile 1 selon le mode de réalisation de la figure 5, les strates 21 a, 22a, 21 c et 22c en fibres chimiques sont réalisées chacune par cardage. Les strates internes 21 a et 22a éventuelles sont disposées de part et d'autre de la couche centrale 3, puis les strates intermédiaires 21 b et 22b en fibres de renfort coupées par un coupeur sont déposées par gravité, puis les strates externes 21c et 22c sont disposées de part et d'autre de l'ensemble ainsi formé.

Dans tous les modes de réalisation précédemment décrits et illustrés sur les figures 1 à 5, on peut prévoir, selon une première variante, que les tronçons de fibres chimiques 7 des couches externes 21 et 22 ne comprennent que des premiers tronçons de fibres chimiques 70.

Selon une seconde variante de chacun des modes de réalisation, on peut prévoir que les tronçons de fibres chimiques 7 des couches externes 21 et 22 comprennent un mélange de premiers tronçons de fibres chimiques 70 et de seconds tronçons de fibres chimiques 71.

Les seconds tronçons de fibres chimiques 71 sont choisis de façon à présenter une température de fusion supérieure à celle des premiers tronçons de fibres chimiques 70 et sont choisis dans une matière moins onéreuse que la matière des premiers tronçons de fibres chimiques 70. On pourra par exemple utiliser des seconds tronçons de fibres chimiques 71 en polyester ou en polyamide.

L'utilisation d'un mélange de premiers tronçons de fibres chimiques 70 et de seconds tronçons de fibres chimiques 71 permet tout d'abord de réduire de façon importante le coût de fabrication de l'armature textile selon l'invention. On peut par exemple utiliser un mélange comprenant environ 50 % à 70 % environ en poids de seconds tronçons de fibres chimiques 71.

L'utilisation d'un mélange permet en outre de réduire la teneur en matière thermofusible des couches externes 21 et 22 pour éviter, suite à l'étape de chauffage, de former en surface de l'armature textile 1 une pellicule étanche de matière thermofusible empêchant toute pénétration de résine, tout en conférant au mélange, grâce aux seconds tronçons de fibres chimiques 71, un grammage suffisant pour être cardé par une carde conventionnelle.

Il est à noter que l'armature textile 1 selon l'invention, notamment sa variante à mélange de premiers tronçons de fibres chimiques 70 et de seconds tronçons de fibres chimiques 71, s'est avérée remarquable dans le cas des techniques dites de "pré-formage".

Dans ce cas, l'armature textile 1 est chauffée au cours de l'étape d) de son procédé de fabrication, en la conformant dans une forme voulue. Le chauffage utilisé est alors juste suffisant pour rendre la forme obtenue transportable jusqu'à une machine d'injection de résine à moule correspondant à la forme obtenue et permettant, préalablement ou simultanément à l'injection de résine, de chauffer à nouveau un peu plus fort l'armature textile.

Dans le cas du pré-formage d'une armature textile 1 à couches extérieures 21 et 22 à mélange de premiers tronçons de fibres chimiques 70 et de seconds tronçons de fibres chimiques 71, on a trouvé avantageux de prévoir une teneur en premiers tronçons de fibres chimiques 70 voisine de 50 % environ en poids ou supérieure.

### Exempte

I) Sur une carde conventionnelle, on réalise une couche centrale 3 de tronçons de fibres 3a monobrins en polypropylène frisé de titre unitaire 110 dTex. Les tronçons de fibres 3a ont une longueur de coupe de 90 mm environ, présentent une frisure de deux ondulations par centimètre environ et une température de fusion comprise entre 170°C et 180°C environ.
   La couche centrale 3 présente une épaisseur moyenne comprise entre 4 et 5 mm environ et un poids de 250 grammes par mètre carré environ.
   Pour une plus grande régularité de la couche centrale 3, on peut mélanger des tronçons de fibres 3a monobrins frisés en polypropylène de titre unitaire 70 dTex à raison de 10 % à 50 % du poids des tronçons de fibres 3a présentant un titre unitaire de 110 dTex.
II) On dépose sur chaque face de la couche centrale 3 une strate interne 21 a et 22a constituées de tronçons de fibres chimiques 7.
   Les tronçons de fibres chimiques 7 sont un mélange comportant 70 % (en poids) de seconds tronçons de fibres chimiques 71 frisés en polyester et 30 % (en poids) de premiers tronçons de fibres chimiques 70 bi-composant. Les premiers tronçons de fibres chimiques 70 bi-composant ont une âme centrale 7a en polyester et une gaine externe 7b thermofusible en copolyester. La gaine externe 7b thermofusible en copolyester a une température de fusion d'environ 110°C.
   Les seconds tronçons de fibres chimiques 71 frisés en polyester ont un titre unitaire compris entre 3 deniers environ et 6 deniers environ, et choisi de préférence égal à environ 3,5 deniers.
   Les premiers tronçons de fibres chimiques 70 bi-composant ont un titre unitaire compris entre 2 deniers environ et 4 deniers environ.
III) On dépose sur chaque strate interne 21 a et 22a une strate intermédiaire 21 b et 22b constituées de tronçons de fibres de renfort 4.
   Les tronçons de fibres de renfort 4 sont des tronçons de fibres de verre 4 ayant un titre unitaire d'environ 50 Tex et une longueur de coupe d'environ 50 mm.
   Le diamètre des fibres élémentaires des tronçons de fibres de verre 4 est d'environ 14 microns.
   Les strates intermédiaires 21 b et 22b ont une densité voisine de 450 g/m².
IV) On dépose sur chaque strate intermédiaire 21 b et 22b une strate externe 21 c et 22c de composition identique à celle des strates internes 21 a et 22a.
V) L'armature textile 1 est introduite au moyen d'un tapis transporteur 11 dans une pré-aiguilleteuse à cylindres. La densité des aiguilles est de 4,6 par centimètre carré, l'écartement des cylindres est de 20 mm et la profondeur de pénétration des aiguilles est de 12 mm. La vitesse de défilement du tapis est de 10 mètres par minute.
VI) Après l'opération de pré-aiguilletage, l'armature textile 1 est introduite dans un four à air traversant 9 comportant une partie chauffante de 20 mètres de longueur et une vitesse de défilement de 10 mètres par minute. La température du four à air traversant 9 est d'environ 120°C.
VII) En sortie du four à air traversant 9, on procède à un calandrage à froid qui donne à l'armature textile 1 son épaisseur finale qui est voisine de 4 à 5 mm environ.

## Revendications

1. Armature textile (1) utilisable pour la réalisation de matériaux ou pièces composites, comprenant :
- une couche centrale (3) à base de tronçons de fibres (3a) en un premier type de matériau synthétique, ayant reçu préalablement à leur mise sous forme de couche un traitement leur communiquant une frisure permanente,
- des couches externes (21, 22) disposées de part et d'autre de la couche centrale (3),
**caractérisée en ce que** :
- les couches externes (21, 22) comportent des tronçons de fibres chimiques (7) ayant reçu préalablement un traitement leur communiquant une frisure permanente, et des tronçons de fibres de renfort (4),
- certains au moins des tronçons de fibres chimiques (7) pénètrent selon une partie de leur longueur dans la couche centrale (3),
- les tronçons de fibres chimiques (7) comportent au moins des premiers tronçons de fibres chimiques (70) comportant au moins une couche superficielle (7b) en un matériau thermofusible ayant une température de fusion inférieure ou égale à celle des tronçons de fibres (3a) de la couche centrale (3),
- les premiers tronçons de fibres chimiques (70) des couches externes (21, 22) adhèrent au moins partiellement entre eux et aux autres tronçons de fibres (3a, 4) de l'armature textile (1).

2. Armature textile (1) selon la revendication 1, **caractérisée en ce que** les tronçons de fibres (3a) de la couche centrale (3) sont en polypropylène, en polyester ou en polyamide.

3. Armature textile (1) selon l'une des revendications 1 ou 2, **caractérisée en ce que** les tronçons de fibres (3a) de la couche centrale (3) présentent au moins deux titres unitaires différents.

4. Armature textile (1) selon l'une quelconque des revendications 1 à 3, **caractérisée en ce que** les tronçons de fibres chimiques (7) des couches externes (21, 22) ont une section transversale de diamètre inférieur à celui des tronçons de fibres de renfort (4).

5. Armature textile (1) selon l'une quelconque des revendications 1 à 4, **caractérisée en ce que** les premiers tronçons de fibres chimiques (70) des couches externes (21, 22) sont en une matière thermofusible à température de fusion inférieure à celle des tronçons de fibres (3a) de la couche centrale (3).

6. Armature textile (1) selon l'une quelconque des revendications 1 à 4, **caractérisée en ce que** :
- les premiers tronçons de fibres chimiques (70) des couches externes (21, 22) sont des tronçons de fibres bi-composant, ayant une âme centrale (7a) en un premier composant et une gaine externe (7b) en un second composant,
- la température de fusion du premier composant de l'âme centrale (7a) est supérieure à celle du second composant de la gaine externe (7b).

7. Armature textile (1) selon la revendication 6, **caractérisée en ce que** :
- l'âme centrale (7a) est en polyamide ou en polyester ou en polypropylène,
- la gaine externe (7b) est en une matière thermofusible à température de fusion inférieure à celle des tronçons de fibres (3a) de la couche centrale (3).

8. Armature textile (1) selon l'une quelconque des revendications 1 à 7, **caractérisée en ce que**, dans les couches externes (21, 22), les tronçons de fibres chimiques (7) ne comportent que des premiers tronçons de fibres chimiques (70).

9. Armature textile (1) selon l'une quelconque des revendications 1 à 7, **caractérisée en ce que**, dans les couches externes (21, 22), les tronçons de fibres chimiques (7) comportant un mélange de premiers tronçons de fibres chimiques (70) et de seconds tronçons de fibres chimiques (71).

10. Armature textile (1) selon l'une quelconque des revendications 1 à 9, **caractérisée en ce que**, dans les couches externes (21, 22), les tronçons de fibres chimiques (7) et les tronçons de fibres de renfort (4) sont mélangés de façon généralement homogène.

11. Armature textile selon l'une quelconque des revendication 1 à 9, **caractérisée en ce que** les couches externes (21, 22) sont stratifiées, comprenant une strate externe (21c, 22c) essentiellement en tronçons de fibres chimiques (7), avec ou sans une strate interne (21a, 22a) essentiellement en tronçons de fibres chimiques (7), et avec une strate intermédiaire (21 b, 22b) essentiellement en fibres de renfort (4).

12. Procédé de fabrication d'une armature textile (1) utilisable pour la réalisation de matériaux ou pièces composites, **caractérisé en ce qu'**il comporte les étapes successives suivantes :
a) prévoir une couche centrale (3) à base de tronçons de fibres (3a) en un premier type de matériau synthétique, ayant reçu préalablement à leur mise sous forme de couche un traitement leur communiquant une frisure permanente,
b) disposer, de part et d'autre de la couche centrale (3), une couche externe (21, 22) comportant des tronçons de fibres de renfort (4) et des tronçons de fibres chimiques (7) à frisure permanente comportant au moins des premiers tronçons de fibres chimiques (70) ayant au moins une couche superficielle (7b) en un second type de matériau synthétique thermofusible à température de fusion inférieure ou égale à celle du premier type de matériau synthétique,
c) effectuer un pré-aiguilletage pour faire pénétrer, selon une partie de leur longueur, des tronçons de fibres chimiques (7), et notamment des premiers tronçons de fibres chimiques (70), dans la couche centrale (3),
d) chauffer l'armature textile (1) pour ramollir au moins superficiellement et rendre adhérents lesdits au moins premiers tronçons de fibres chimiques (70).

13. Procédé selon la revendication 12, **caractérisé en ce qu'**il comporte en outre, après l'étape d), une étape e) au cours de laquelle on effectue un calandrage à froid de l'armature textile (1).

14. Procédé selon l'une des revendications 12 ou 13, **caractérisé en ce que** :
- les tronçons de fibres chimiques (7) des couches externes (21, 22) ont un diamètre inférieur à celui des tronçons de fibres de renfort (4),
- le pré-aiguilletage de l'étape c) est effectué à l'aide d'aiguilles (8) qui comportent des barbes (8a) aptes à entraîner préférentiellement les tronçons de fibres chimiques (7), notamment les premiers tronçons de fibres chimiques (70), mais inaptes à entraîner de façon sensible les tronçons de fibres de renfort (4) à diamètre plus gros.

15. Procédé selon l'une quelconque des revendications 12 à 14, **caractérisé en ce qu'**au cours de l'étape d), le chauffage est réalisé par circulation d'air chaud à travers l'armature textile (1).

## Claims

1. Textile armature (1) usable for the production of composite materials or parts, comprising:
- a central layer (3) based on chopped fiber sections (3a) of a first type of synthetic material that have received before their formation into a layer a treatment communicating to them a permanent crimp,
- external layers (21, 22) disposed on opposite sides of the central layer (3),
**characterized in that**:
- the external layers (21, 22) include chopped chemical fiber sections (7) that have previously received a treatment conferring on them a permanent crimp and chopped reinforcement fiber sections (4),
- at least some of the chopped chemical fiber sections (7) penetrate over a part of their length into the central layer (3),
- the chopped chemical fiber sections (7) include at least first chopped chemical fiber sections (70) including at least one surface layer (7b) of a thermoplastic material having a melting point lower than or equal to that of the chopped fiber sections (3a) of the central layer (3),
- the first chopped chemical fiber sections (70) of the external layers (21, 22) adhere at least partly to each other and to the other chopped fiber sections (3a, 4) of the textile armature (1).

2. Textile armature (1) according to claim 1, **characterized in that** the chopped fiber sections (3a) of the central layer (3) are of polypropylene, polyester or polyamide.

3. Textile armature (1) according to either of claims 1 or 2, **characterized in that** the chopped fiber sections (3a) of the central layer (3) have at least two different unitary linear densities.

4. Textile armature (1) according to any of claims 1 to 3, **characterized in that** the chopped chemical fiber sections (7) of the external layers (21, 22) have a cross section with a diameter less than that of the chopped reinforcement fiber sections (4).

5. Textile armature (1) according to any of claims 1 to 4, **characterized in that** the first chopped chemical fiber sections (70) of the external layers (21, 22) are of a thermoplastic material with a melting point lower than that of the chopped fiber sections (3a) of the central layer (3).

6. Textile armature (1) according to any of claims 1 to 4, **characterized in that**:
- the first chopped chemical fiber sections (70) of the external layers (21, 22) are two-component chopped fiber sections having a central core (7a) of a first component and an external sheath (7b) of a second component,
- the melting point of the first component of the central core (7a) is higher than that of the second component of the external sheath (7b).

7. Textile armature (1) according to claim 6, **characterized in that**:
- the central core (7a) is of polyamide, polyester or polypropylene,
- the external sheath (7b) is of a thermoplastic material with a melting point lower than that of the chopped fiber sections (3a) of the central layer (3).

8. Textile armature (1) according to any of claims 1 to 7, **characterized in that** the chopped chemical fiber sections (7) in the external layers (21, 22) include only first chopped chemical fiber sections (70).

9. Textile armature (1) according to any of claims 1 to 7, **characterized in that** the chopped chemical fiber sections (7) in the external layers (21, 22) include a mixture of first chopped chemical fiber sections (70) and second chopped chemical fiber sections (71).

10. Textile armature (1) according to any of claims 1 to 9, **characterized in that** the chopped chemical fiber sections (7) and the chopped reinforcement fiber sections (4) in the external layers (21, 22) are mixed in a generally homogeneous manner.

11. Textile armature according to any of claims 1 to 9, **characterized in that** the external layers (21, 22) are stratified, comprising an external stratum (21c, 22c) essentially of chopped chemical fiber sections (7), with or without an internal stratum (21a, 22a) essentially of chopped chemical fiber sections (7) and with an intermediate stratum (21b, 22b) essentially of reinforcement fibbers (4).

12. Method of fabricating a textile armature (1) usable for the production of composite materials or parts, **characterized in that** it includes the following successive steps:
a) providing a central layer (3) based on chopped fiber sections (3a) of a first type of synthetic material that have received before their formation into a layer a treatment conferring on them a permanent crimp,
b) disposing on opposite sides of the central layer (3) an external layer (21, 22) including chopped reinforcement fiber sections (4) and chopped chemical fiber sections (7) with a permanent crimp including at least first chopped chemical fiber sections (70) having at least one surface layer (7b) of a second type of thermoplastic synthetic material with a melting point lower than or equal to that of the first type of synthetic material,
c) effecting preliminary needle-punching to cause the chopped chemical fiber sections (7), in particular the first chopped chemical fiber sections (70), to penetrate into the central layer (3) over part of their length,
d) heating the textile armature (1) to soften at least superficially and to render adherent at least said first chopped chemical fiber sections (70).

13. Method according to claim 12, **characterized in that** it further includes after the step d) a step e) during which the textile armature (1) is cold-rolled.

14. Method according to either of claims 12 or 13, **characterized in that**:
- the chopped chemical fiber sections (7) of the external layers (21, 22) have a diameter less than that of the chopped reinforcement fiber sections (4),
- the preliminary needle-punching of the step c) is effected by means of needles (8) that have barbs (8a) adapted to entrain preferentially the chopped chemical fiber sections (7), in particular the first chopped chemical fiber sections (70), but not to entrain significantly the larger diameter chopped reinforcement fiber sections (4).

15. Method according to any of claims 12 to 14, **characterized in that** during the step d) the heating is effected by circulating hot air through the textile armature (1).

## Patentansprüche

1. Textile Bewehrung (1) verwendbar für die Realisierung von Materialien oder Kompositteilen, enthaltend:
- eine zentrale Schicht (3) auf Basis von Abschnitten von Fasern (3a) eines ersten Typs von synthetischen Materialien, die vorab ihrer Ausbildung gemäß der Form der Schicht eine Behandlung erhalten haben, die ihnen eine permanente Kräuselung gibt,
- äußere Schichten (21, 22), die auf beiden Seiten der zentralen Schicht (3) angeordnet sind,
**dadurch gekennzeichnet, daß**:
- die äußeren Schichten (21, 22) Abschnitte von chemischen Fasern (7) haben, die vorab eine Behandlung erfahren haben, die ihnen eine permanente Kräuselung gibt, und Abschnitte von Verstärkungsfasern (4),
- mindestens einige der Abschnitte von chemischen Fasern (7) über einen Teil ihrer Länge in die zentrale Schicht (3) eindringen,
- die Abschnitte von chemischen Fasern (7) mindestens erste Abschnitte von chemischen Fasern (70) aufweise, die mindestens eine Oberflächenschicht (7b) aus einem thermoschmelzbaren Material enthalten, das eine Schmelztemperatur hat, die kleiner oder gleich derjenigen der Abschnitte von Fasern (3a) der zentralen Schicht (3) ist,
- die ersten Abschnitte von chemischen Fasern (70) der äußeren Schichten (21, 22) mindestens teilweise untereinander an den Abschnitte von Fasern (3a, 4) der textilen Bewehrung (1) anhaften.

2. Textile Bewehrung (1) nach Anspruch 1, **dadurch gekennzeichnet, daß** die Abschnitte von Fasern (3a) der zentralen Schicht (3) aus Polypropylen, aus Polyester oder Polyamid sind.

3. Textile Bewehrung (1) nach einem der Ansprüche 1 oder 2, **dadurch gekennzeichnet, daß** die Abschnitte von Fasern (3a) der zentralen Schicht (3) mindestens zwei einheitliche unterschiedliche Bereiche bilden.

4. Textile Bewehrung (1) nach irgendeinem der Ansprüche 1 bis 3, **dadurch gekennzeichnet, daß** die Abschnitte der chemischen Fasern (7) der äußeren Schichtten (21, 22) einen Querschnitt mit einem Durchmesser haben, der kleiner ist als derjenige der Abschnitte von Verstärkungsfasern (4).

5. Textile Bewehrung (1) nach irgendeinem der Ansprüche 1 bis 4, **dadurch gekennzeichnet, daß** die ersten Abschnitte von chemischen Fasern (70) der äußeren Schichten (21, 22) aus thermoschmelzbaren Material mit einer Schmelztemperatur sind, die kleiner ist als diejenige der Abschnitte von Fasern (3a) der zentralen Schicht (3).

6. Textile Bewehrung (1) nach irgendeinem der Ansprüche 1 bis 4, **dadurch gekennzeichnet, daß**:
- die ersten Abschnitte von chemischen Fasern (70) der äußeren Schichten (21, 22) Abschnitte von Zweikomponentenfasern sind, die eine zentrale Seele (7a) aus einer ersten Komponente und eine äußere Hülle (7b) aus einer zweiten Komponente haben,
- die Schmelztemperatur der ersten Komponente der zentralen Seele (7a) größer ist als diejenige der zweiten Komponente der externen Hülle (7b).

7. Textile Bewehrung (1) nach Anspruch 6, **dadurch gekennzeichnet, daß**:
- die zentrale Seele (7a) aus Polyamid, aus Polyester oder aus Polypropylen ist,
- die externe Hülle (7b) aus einem thermoschmelzbaren Material mit einer Schmelztemperatur ist, die kleiner ist als diejenige der Abschnitte von Fasern (3a) der zentralen Schicht (3).

8. Textile Bewehrung (1) nach irgendeinem der Ansprüche 1 bis 7, **dadurch gekennzeichnet, daß** in den äußeren Schichten (21, 22) die chemischen Fasern (7) nur erste Abschnitte von chemischen Fasern (70) aufweisen.

9. Textile Bewehrung (1) nach irgendeinem der Ansprüche 1 bis 7, **dadurch gekennzeichnet, daß** in den äußeren Schichten (21, 22) die chemischen Fasern (7) eine Mischung aus ersten Abschnitten von chemischen Fasern (70) und aus zweiten Abschnitten von chemischen Fasern (71) aufweisen.

10. Textile Bewehrung (1) nach irgendeinem der Ansprüche 1 bis 9, **dadurch gekennzeichnet, daß** in den äußeren Schichten (21, 22) die Abschnitte von chemischen Fasern (7) und die Abschnitte von Verstärkungsfasern (4) in generell homogener Weise gemischt sind.

11. Textile Bewehrung nach irgendeinem der Ansprüche 1 bis 9, **dadurch gekennzeichnet, daß** die äußeren Schichten (21, 22) geschichtet sind, wobei sie eine äußere Schichtung (21c, 22c) haben, die im wesentlichen aus Abschnitten von chemischen Fasern (7) besteht, mit oder ohne einer internen Schichtung (21a, 22a), die im wesentlichen aus Abschnitten von chemischen Fasern (7) besteht und mit einer Zwischenschichtung (21b, 22b) die im wesentlichen aus Verstärkungsfasern (4) besteht.

12. Verfahren zur Herstellung einer textilen Bewehrung (1) die für die Realisierung von Materialen oder Kompositteilen verwendbar ist, **dadurch gekennzeichnet, daß** es die folgenden aufeinanderfolgenden Schritte enthält:
a) Bereitstellen einer zentralen Schicht (3) auf Basis von Abschnitten von Fasern (3a) aus einem ersten synthetischen Material, die vorab vor ihrer Formung als Schicht eine Behandlung erfahren haben, die ihnen eine permanente Kräuselung gibt,
b) beidseitiges Anordnen an der zentralen Schicht (3) einer äußeren Schicht (21, 22), die Abschnitte von Verstärkungsfasern (4) und Abschnitte von chemischen Fasern (7) mit permanenter Kräuselung enthalten, die mindestens erste Abschnitte von chemischen Fasern (70) enthält, die mindestens eine Oberflächenschicht (7b) aus einem zweiten Typ von synthetischem Material aufweist, das thermoschmelzbar bei einer Schmelztemperatur ist, die kleiner oder gleich derjenigen des ersten Typs von synthetischen Materialen ist,
c) Durchführen einer Vorvernadelung, um die Abschnitte von chemischen Fasern (7) längs eines Teiles ihrer Länge und insbesondere die ersten Abschnitte von chemischen Fasern (70) in die zentrale Schicht (3) eindringen zu lassen,
d) Erwärmen der textilen Bewehrung (1) um die genannten mindestens ersten Abschnitte von chemischen Fasern (70) mindestens oberflächlich aufzuweichen und sie klebrig zu machen.

13. Verfahren nach Anspruch 12, **dadurch** gekennzeichnen, daß es zusätzlich nach dem Schritt d) einen Schritt e) enthält, währenddessen man eine Kältebehandlung der textilen Bewehrung (1) durchführt.

14. Verfahren nach einem der Ansprüche 12 oder 13, **dadurch gekennzeichnet, daß**:
- die Abschnitte von chemischen Fasern (7) der äußeren Schichten (21, 22) einen Durchmesser haben, der kleiner ist, als derjenige der Abschnitte von Verstärkungsfasern (4),
- die Vorvernadelung bei Schritt c) mit Hilfe von Nadeln (8) durchgeführt wird, die Grannen (8a) haben, die geeignet sind, vorzugsweise die Abschnitte von chemischen Fasern (7), insbesondere die ersten Abschnitte (70) mit sich zu führen, jedoch nicht geeignet sind, in wesentlicher Weise die Abschnitte von Verstärkungsfasern (4) mit größerem Durchmesser mit sich zu führten.

15. Verfahren nach irgendeinem der Ansprüche 12 bis 14, **dadurch gekennzeichnet, daß** während des Schrittes d) die Erwärmung durch Zirkulation von heißer Luft durch die textile Bewehrung (1) hindurch bewirkt wird.
